# EUROPEAN PATENT SPECIFICATION

(11) **EP 3 240 697 B1**
(45) Date of publication and mention of the grant of the patent: **24.10.2018**
(21) Application number: 15825760.0
(22) Date of filing: 30.12.2015
(51) Int. Cl.: B60C 1/00

(54) **TIRE TREAD WITH IMPROVED DRY/SNOW TRACTION**
LAUFFLÄCHE MIT VERBESSERTER TRAKTION AUF SCHNEE UND TROCKENEN FLÄCHEN
BANDE DE ROULEMENT DE PNEU AVEC ADHÉRENCE AMÉLIORÉE SUR LA NEIGE /SUR TERRAIN SEC

(30) Priority: 31.12.2014 US 201462098941 P
(43) Date of publication of application: 08.11.2017
(73) Proprietor: Compagnie Générale des Etablissements Michelin, 63000 Clermont-Ferrand (FR)
(72) Inventor: SANDERS, Evan, Greenville, SC 29605 (US); CATO, Anthony, Greenville, SC 29605 (US)
(74) Representative: Casalonga
(86) International application number: PCT/US2015/068150
(87) International publication number: WO 2016/109724

(56) References cited:
- WO-A1-2013/147827
- US-A1- 2012 132 332

## Description

### BACKGROUND OF THE INVENTION

### Field of the Invention

This invention relates generally to tires for vehicles and more particularly, to tread sculptures and tread materials.

### Description of the Related Art

It is known in the industry that tire designers must often compromise on certain characteristics of tires they are designing. Changing a tire design to improve one characteristic of the tire will often result in a compromise; *i.e.,* an offsetting decline in another tire characteristic. One such compromise exists between snow traction and dry braking. Snow traction may be improved by decreasing the glass transition temperature of the tread mix and/or by increasing the number of sipes in the tread. These moves, however, typically result in a decrease in dry braking performance that is known to be improved by increasing the glass transition temperature of the tread mix and/or by decreasing the number of sipes in the tread.

Tire designers and those conducting research in the tire industry search for materials and tire structures that can break some of the known compromises. It would be desirable to provide new tire designs that break the compromise between dry braking and snow traction.

### SUMMARY OF THE DISCLOSURE

A tire tread formed from a rubber composition having a functionalized SBR and a BR that is reinforced with between 95 phr and 125 phr of a silica filler and includes a plasticizing system to adjust the glass transition temperature to be between -30 °C and -15 °C and the dynamic modulus G* at 60 °C to be between 0.9 MPa and 1.15 MPa. The tread includes central tread blocks having an average central tread block length of between 6.5 mm and 10 mm and shoulder tread blocks having an average shoulder tread block length of between 10 mm and 20 mm. Furthermore the tread is limited to being between 6.5 mm and 7.7 mm thick.

### BRIEF DESCRIPTION OF THE DRAWINGS

FIG. **1** is a perspective, partial cutaway view of an exemplary tire.
FIG. **2** is a plan view of a pitch from an exemplary tire in accordance with the treads disclosed herein.
FIG. **3** is a partial view of the pitch shown in FIG. **2****.**
FIGS. **4A** and **4B** are plan views of a tread block having lateral sipes disposed at an angle from the lateral axis.
FIG. **5** is a cross sectional view of an exemplary tire in accordance with the treads disclosed herein.

### DETAILED DESCRIPTION OF PARTICULAR EMBODIMENTS

Particular embodiments of the present invention include tires and tire treads that have improved snow traction properties while surprisingly maintaining good dry traction properties. Such tires are particularly useful as all-weather tires and/or winter tires for passenger cars and/or light trucks.

The compromise between dry traction and snow traction was broken through a unique combination of materials and sculpture design. The treads that are disclosed herein are made of a rubber composition that includes a functionalized styrene-butadiene rubber (SBR) and further are of a thin design. By using the functionalized SBR that is known to provide improved wear, the inventors of these treads were able to adjust the sculpture and rubber properties that in combination provide the tread characteristics of improved snow traction without significant loss of dry traction, thereby breaking that compromise.

As used herein, the "longitudinal" direction is in the tire circumferential direction and is perpendicular to the tire axis of rotation.

As used herein, the "lateral" direction is along the tire width and is substantially parallel to the axis of rotation. However, unless otherwise indicated, a "lateral groove or sipe" is any groove or sipe generally oriented at an angle less than 45 degrees with the purely lateral direction while a "longitudinal groove or sipe" is any groove generally oriented at an angle greater than or equal to 45 degrees with the purely lateral direction.

As used herein, the "tread thickness" is the tread depth bonded by a top, ground-engaging side and a bottom side of the tread

As used herein, a "groove" has a width opening to the tread face of 0.6 mm or more while a "sipe" is a small slit molded or otherwise formed in a tread block or rib and has a width opening to the tread face of less than 0.6 mm. Grooves are troughs formed within the tread for, *inter alia,* the channeling of water and other substances encountered by the tire while sipes typically provide surface edges for traction and may often reduce tread element stiffness.

As used herein, a "tread element" is any type or shape of a structural feature found in the tread that contacts the ground. Examples of tread elements include tread blocks and tread ribs.

As used herein, a "tread block" is a tread element that has a perimeter defined by one or more grooves and/or sipes, creating an isolated structure in the tread.

As used herein, a "rib" is a tread element that runs substantially in the longitudinal direction of the tire and is not interrupted by any grooves that run in the substantially lateral direction or any other grooves oblique thereto.

As used herein, "phr" is "parts per hundred parts of rubber" by weight and is a common measurement in the art wherein components of a rubber composition are measured relative to the total weight of rubber in the composition, *i.e.,* parts by weight of the component per 100 parts by weight of the total rubber(s) in the composition.

As used herein, rubber and elastomer are synonymous terms.

As used herein, "based upon" is a term recognizing that embodiments of the present invention are made of vulcanized or cured rubber compositions that were, at the time of their assembly, uncured. The cured rubber composition is therefore "based upon" the uncured rubber composition. In other words, the cross-linked rubber composition is based upon or comprises the constituents of the cross-linkable rubber composition.

As is known generally, a tire tread is the road-contacting portion of a vehicle tire that extends circumferentially about the tire. It is designed to provide the handling characteristics required by the vehicle, *e.g.,* traction, dry braking, wet braking, cornering and so forth - all being preferably provided with a minimum amount of noise being generated and at a low rolling resistance.

Reference will now be made in detail to embodiments of the invention, one or more examples of which are illustrated in the drawings. Each example is provided by way of explanation of the invention. For example, features illustrated or described as part of one embodiment can be used with another embodiment to yield still a third embodiment. It is intended that the present invention include these and other modifications and variations.

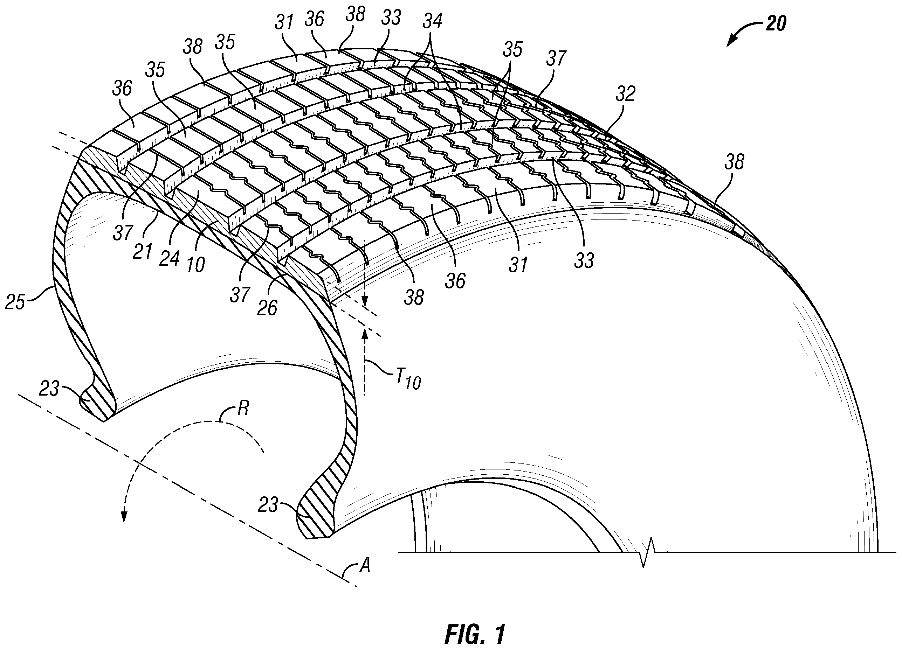

FIG. **1** is a perspective, partial cutaway view of an exemplary tire. The tire **20** includes a crown section **21,** a bead section **23** and a sidewall section **25** that extends radially from the rotation axis **A** of the tire and the bead section **23** to the crown section **21.** The tire has a tread **10** for contacting the road surface, the tread **10** having a tread thickness **T₁₀** extending in a radial direction of the tire (relative to the rotation axis **A**) from the outer ground-engaging face **24** of the tread to a bottom side **25** that bonds to the crown section **21.** The tread thickness **T₁₀** is measured herein in the center portion **32** of the tread since, as is known, the shoulder section may have a tread thickness that tapers near the sides of the tire.

The tread **10** includes a shoulder portion **31** and a central portion **32** that are separated from each other by a shoulder longitudinal or circumferential groove **33.** The central portion **32** may include one or more central longitudinal or circumferential grooves **34.** The central portion **32** is therefore positioned between the two shoulder portions **31** and bordered by the two shoulder longitudinal grooves **33.**

Also included in the tread **10** are a plurality of central tread blocks **35** that are formed by lateral central sipes **37** extending between two of the central longitudinal grooves **34** or between a central longitudinal groove **34** and a shoulder longitudinal groove **33.** A plurality of shoulder tread blocks **36** are formed in the shoulder portion **31** of the tread **10** by lateral shoulder sipes **38** extending from the shoulder longitudinal groove **33** towards the sidewall **25** side of the tread **10.**

The tread **10** is supported by the crown section **21** that is positioned radially-inward of the tread **10,** the crown **21** having a belt package (not shown) to stiffen the casing and to provide improved wear and handling response. The belt package, as is well known, may include one or more layers of cords, typically steel cords, embedded in a thin layer of rubber and typically arranged circumferentially around the tire.

The pair of bead sections **23** are arranged to face each other in the tire width or axial direction. The bead section **23** includes the bead (not shown), as well known, which is an inextensible bead core that anchors the plies and locks the tire onto a wheel assembly. The carcass ply (not shown) extends between the bead sections **23,** extending from one bead through one sidewall section **25,** through the crown section **21,** typically below the belt package and through the other sidewall section **25** to the other bead.

Typically, the carcass ply may be constructed from a plurality of mutually parallel textile or metal cords embedded in an elastomeric matrix, such as a thin layer of a rubber composition. As known to one having ordinary skill in the art, the carcass ply is typically formed using a calendaring process wherein the cords are laid parallel to each other and encased in the elastomeric matrix. The carcass ply is then arranged in a manner such that the cords are typically oriented in a radial direction along the sidewalls **25** of the tire **20.** More specifically, along the sidewalls **25** of the tire **20,** the cords of the carcass ply are substantially perpendicular to the axis of rotation of tire.

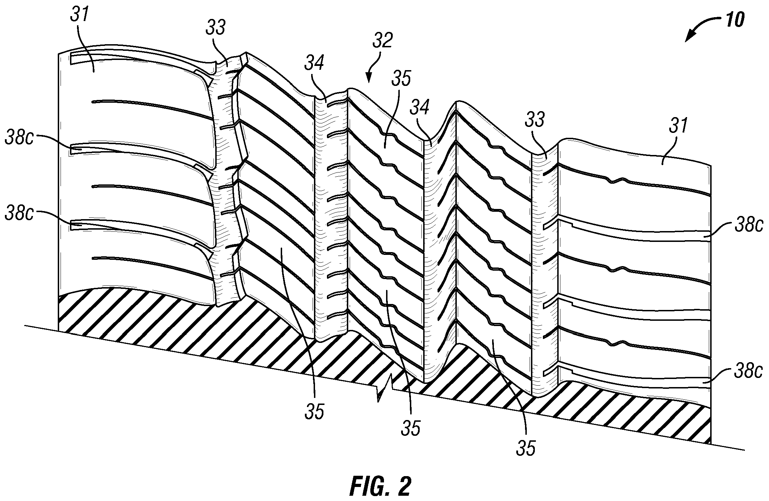

FIG. **2** is a plan view of a pitch from an exemplary tire tread in accordance with the treads disclosed herein. A pitch is a geometrical pattern that is repeated along the circumference of a tread and extends across the lateral width of the tread. A tire may have one or more repeating pitches. The pitch of the tread **10** shown in FIG. **2** is repeated circumferentially about a tire to complete the tire tread.

The tread **10** includes the shoulder longitudinal grooves **33** that border the shoulder portions **31** and the central portion **32.** The central portion **32** includes the central longitudinal grooves **34** and the plurality of central tread blocks **35.**

In particular embodiments of the treads disclosed herein, the tread thickness is between 6.5 mm and 7.7 mm. Since it is typical that treads will taper towards the lateral ends in the shoulder area, the tread is thickness is measured in the central portion of the tread. Alternatively the tread thickness may be between 6.5 mm and 7.3 mm or between 6.5 mm and 7 mm thick. As noted previously, it is the thinness of the tread coupled with the functionalized SBR of the tread and tread elements that provide the break in the compromise between dry traction and snow traction.

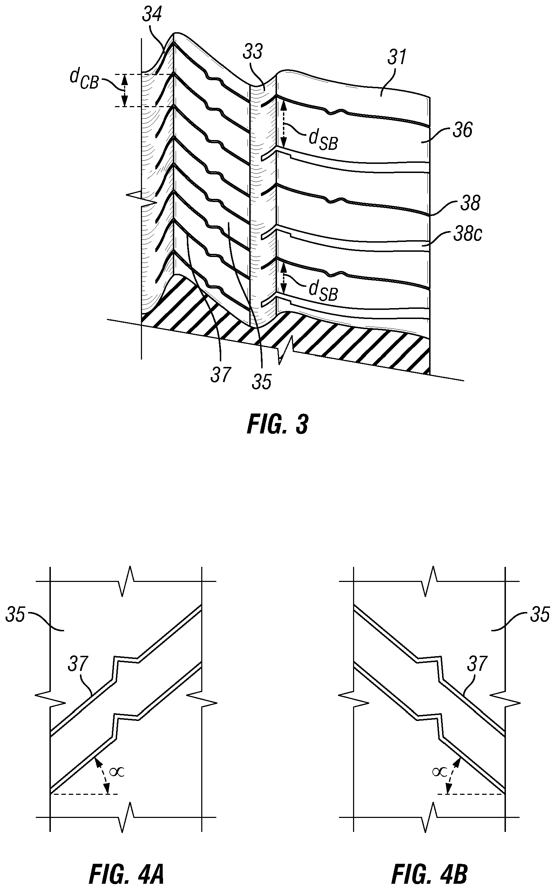

FIG. **3** is a partial view of the pitch shown in FIG. **2** and best shows the length of the tread blocks in both the shoulder portion and the central portion. As shown in FIG. **3****,** each of the central tread blocks **35** shown in this exemplary figure are formed by the shoulder longitudinal groove **33,** the central longitudinal groove **34** and two of the lateral central sipes **37.** The central tread block length **d_{CB}** of each central tread block **35** is the longitudinal length of the tread block edge between the two lateral central sipes **37** that form the tread block. Likewise, the shoulder tread block length **d_{SB}** of each shoulder tread block **36** is the longitudinal length of the tread block edge between the two lateral shoulder sipes **38** that form the tread block. For those embodiments of a tread having longitudinal lengths on opposite lateral edges of a tread block not equal, as when the sipes are not parallel, then the tread block length is the average of the lengths of the two edges. In particular embodiments of the treads disclosed herein, the sipes forming a block are essentially parallel.

It should be noted that for particular embodiments of the treads disclosed herein, the central tread blocks are always formed by the lateral central sipes, there being no lateral grooves in the central portion of the treads. As was noted in the definitions, a sipe is a small slit molded or otherwise formed in a tread block or rib and has an opening to the tread face of less than 0.6 mm. Grooves are defined as having openings on the tread face of 0.6 mm or more. Optionally particular embodiments may include a limited number of lateral grooves in the central portion, such as no more than 10 % of the total number of lateral grooves and sipes or alternatively, no more than 5 %, no more than 3 % or no more than 1 %.

Likewise it should be noted that for particular embodiments of the treads disclosed herein, the shoulder tread blocks are always formed by the lateral shoulder sipes, there being no lateral grooves in the shoulder portions of the treads. Optionally particular embodiments may include a limited number of lateral grooves in the shoulder portion, such as no more than 35 % of the total number of lateral grooves and sipes or alternatively, no more than 30 %, no more than 25 %, no more than 20 %, no more than 10 %, no more than 5 %, no more than 3 % or no more than 1 %.

The use of lateral sipes rather than lateral grooves in the shoulder and central portions of the tread improve the performance of the tread by providing the necessary structure and if too many of the sipes are replaced with lateral grooves, then the desired performance of the tire will be lost.

In those embodiments that include a limited number of lateral grooves in the central portion and/or in the shoulder portion, the tread block lengths are measured by treating the limited number of lateral grooves as though they were sipes for purposes of the measurement of the tread block length. Furthermore, in particular embodiments of the treads disclosed herein, such limited numbers of lateral grooves are distributed essentially evenly around the circumference of the tire.

For the central portion of the treads disclosed herein there is an average central tread block length. The average central tread block length is the calculated average of all the central tread block lengths **d_{CB}** in the central portion divided by the number of central tread blocks. To obtain the average central tread block length, the central tread block length **d_{CB}** of every central tread block is measured and added together and then this sum is divided by the number of central tread blocks to provide the average central tread block length.

Particular embodiments of the treads disclosed herein may be characterized as having an average central tread block length of between 6.5 mm and 10 mm or alternatively between 6.8 mm and 9 mm or between 7 mm and 8 mm.

For the shoulder portions of the treads disclosed herein there is an average shoulder tread block length. The average shoulder tread block length is the calculated average of all the shoulder tread block lengths **d_{SB}** in the shoulder portion divided by the number of shoulder tread blocks in the shoulder portion. To obtain the average shoulder tread block length, the shoulder tread block length **d_{SB}** of every shoulder tread block is measured and added together and then this sum is divided by the number of shoulder tread blocks to provide the average shoulder tread block length in the shoulder portion.

Particular embodiments of the treads disclosed herein may be characterized as having an average shoulder tread block length of between 10 mm and 20 mm or alternatively between 11mm and 19 mm, between 12 mm and 18 mm or between 14 mm and 17 mm.

It may be noted that optionally a portion of the lateral sipes may have chamfered openings onto the tread face. As may be seen in FIG. **3****,** there are chamfered shoulder lateral sipes 38c in the shoulder portion of the tread. Such chamfered sipes may be included in the shoulder portion or in the central portion or in both. In those embodiments having chamfered sipes, the ratio of the chamfered sipes to non-chamfered sipes may be 1:1 or alternatively, 1:2, 1:3 or 1:4, typically with the chamfered sipes alternating with the non-chamfered sipes. For example if the ratio was 1:3, then the sipes would typically alternate circumferentially as CUUUCUUU and so forth. In particular embodiments, the chamfers may form up to a 45 degree angle with the tread face or alternatively between 25 degrees and 45 degrees.

FIGS. **4A** and **4B** are plan views of a tread block having lateral sipes disposed at an angle from the lateral axis. The lateral axis is parallel to the axis of rotation **A.** In particular embodiments, optionally the lateral sipes in the central portion, the shoulder portion or both may be disposed at an angle α from the lateral axis and α may be up to 45 degrees or alternatively, between 30 degrees and 45 degrees, between 35 degrees and 45 degrees, between 40 degrees and 45 degrees or between 35 degrees and 40 degrees. It has been found that for particular embodiments, placing the sipes at an angle from the lateral axis provides improved tread performance.

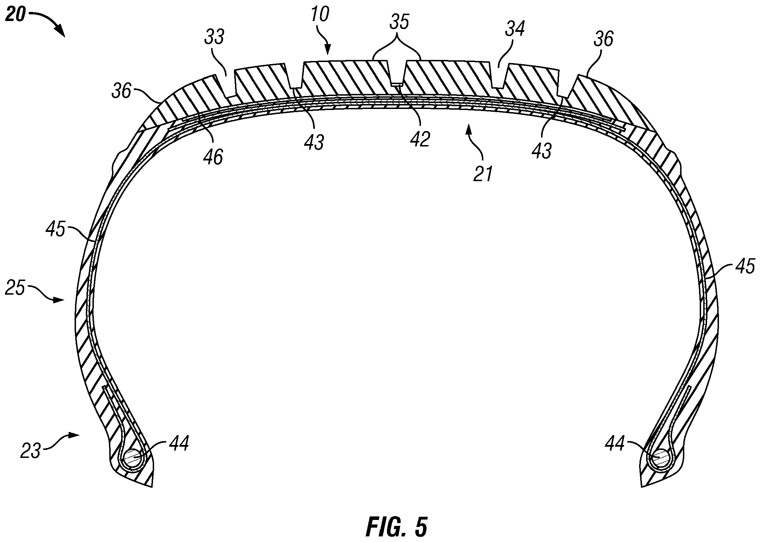

FIG. **5** is a cross sectional view of an exemplary tire in accordance with the treads disclosed herein. The tire **20** shown in FIG. **5** has a crown section **21** that includes the belt package **46** and the carcass ply **45** extending between the two beads **44.** The tread **10** is supported by the crown section **21** and includes the shoulder tread blocks **36,** the central tread blocks **35,** the shoulder longitudinal groove **33** separating the shoulder and central portions and the central longitudinal groove **34.**

The longitudinal grooves **33** and **34** extend from their opening on the face of the tread **10** to a groove bottom **43.** The distance between the groove bottom **43** and the tread face is the depth of the groove. Since the purpose of the grooves includes channeling of water from the roadway when it is raining, the tire tread is provided with a wear bar **42** that appears intermittently around the groove so that when the tread wears to the wear bar, the user knows that the tire needs to be removed from service. Wear bar depth is often set by government regulation and marks the minimum tread depth for tire operation on the roads. The wear bar depth is the distance from the tread face to the top face of the wear bar.

Likewise the distance between a sipe bottom and the tread face is the depth of the sipe. Particular embodiments of the treads disclosed herein provide that the lateral central sipes and/or the lateral shoulder sipes that form the tread blocks in the central and shoulder portions may be characterized as extending across their entire length (from one lateral edge of the tread block to the other lateral edge of the tread bock) to a depth of at least 90 % of the depth of the wear bar or at least 100 % of the depth of the wear bar. For example a lateral sipe that extends to 100 % of the depth of the wear bar would extend so that the bottom of the sipe was level with the top of the wear bar. In other embodiments, the lateral central sipes and/or the lateral shoulder sipes that form the tread blocks in the central and shoulder portions may be characterized as extending across their entire length to a depth of at least 90 % of the groove depth bordering the tread block of the sipe or at least 100 % of such depth. For example a lateral sipe that extends to 100 % of the depth of the groove depth would extend so that the bottom of the sipe was level with the bottom of the groove.

While particular embodiments of such treads provide that all such sipes have these depths extending across their entire length, it is recognized that alternatively, in particular embodiments, at least 80 % of the total of the sipes may be characterized as extending to such depths across their entire lengths or alternatively, at least 90 % or at least 95 %. Such alternatives may apply, in particular different embodiments, just to the shoulder lateral sipes or just to the central lateral sipes or to both the lateral shoulder and central sipes.

The treads as described above all are formed at least in part from a rubber composition that includes both a functionalized SBR and a polybutadiene rubber (BR) or alternatively for particular embodiments just a functionalized SBR. Those skilled in the art will recognize that while the treads disclosed herein may be formed entirely of the rubber compositions described below, there are tread designs that would use such rubber compositions to form only a portion of the treads.

It is recognized that treads may be formed from only one rubber composition or in two or more layers of differing rubber compositions, *e.g.,* a cap and base construction. In a cap and base construction, the cap portion of the tread is made of one rubber composition that is designed for contract with the road. The cap is supported on the base portion of the tread, the base portion made of different rubber composition. In particular embodiments of the present invention the entire tread may be made from the rubber compositions disclosed herein while in other embodiments only the cap portions of the tread may be made from such rubber compositions.

In other embodiments it is recognized that the contact surface of the tread elements, *i.e.,* that portion of the tread element that contacts the road, may be formed totally and/or only partially from the rubber compositions disclosed herein. In particular embodiments the tread block, for example, may be formed as a composite of laterally layered rubber compositions such that at least one lateral layer of a tread block is of the rubber compositions disclosed herein and another lateral layer of a tread block is of an alternative rubber composition. In particular embodiments of tread constructions, at least 80 % of the total contact surface area of the tread is formed solely from the rubber compositions disclosed herein. The total contact surface area of the tread is the total surface area of all the radially outermost faces of the tread elements that are adapted for making contact with the road.

BR is a common rubber component useful in many rubber articles, including tires, and is a homopolymer of conjugated 1,3-butadiene. SBR is a copolymer of styrene and 1, 3-butadiene and is one of the most commonly used synthetic rubbers. The microstructure of SBR is typically described in terms of the amount of bound styrene and the form of the butadiene portion of the polymer. A typical SBR that is often suitable for use in tires is around 25 wt. % bound styrene. Materials having a very high content of bound styrene, *e.g.,* around 80 wt. %, are identified as high styrene resins and are not suitable as an elastomer for manufacturing treads. Particular embodiments of the present invention may utilize an SBR having a bound styrene content of between 3 wt. % and 40 wt. % or alternatively between 10 wt. % and 35 wt. %, between 15 wt. % and 28 wt. % or between 30 wt. % and 40 wt. % bound styrene.

Because of the double bond present in the butadiene portion of the SBR, the butadiene portion is made up of three forms: *cis*-1,4, *trans*-1,4 and vinyl-1,2. Optionally the functionalized SBR materials suitable for use in the rubber compositions disclosed herein are those having a high *trans*-1,4 content of at least 30 wt. % or alternatively between 30 wt. % and 70 wt. %, between 35 wt. % and 55 wt. % or between 35 wt. % and 45 wt. %.

Methods for determining the microstructure of the butadiene portion of the SBR materials are well known to those having ordinary skill in the art and include, for example, NMR methods and infrared spectroscopy methods. In one suitable NMR spectroscopy method, a carbon-13 NMR analyses may be performed using, for example, a Bruker AM250 spectrometer. The nominal frequency of carbon-13 is 62.9 MHz and the spectra are recorded without the "nuclear Overhauser effect" (NOE) to ensure quantitative results. The spectral width is 240 ppm. The angle pulse used is a 90° pulse, the duration of which is 5 µs. Low-power decoupling with a wide proton band are used to eliminate scalar ¹H-carbon-13 coupling during carbon-13 acquisition. The sequence repetition time is 4 seconds. The number of transients accumulated to increase the signal/noise ratio is 8192. The spectra are calibrated against the CDCl₃ band at 77 ppm.

Functionalized rubbers, *i.e.,* those appended with active moieties, are well known in the industry. The elastomers may be functionalized by attaching these active moieties to the polymer backbone, along the branches of the polymer or at the branch ends of the polymer. Examples of functionalized elastomers include silanol or polysiloxane functionalized elastomers, examples of which may be found in US Patent No. 6,013,718, which is hereby fully incorporated by reference. Other examples of functionalized elastomers include those having alkoxysilane groups as described in US 5,977,238, carboxylic groups as described in US 6,815,473, polyether groups as described in US 6,503,973 or amino groups as described in US 6,800,582 and are all incorporated herein by reference. The functional groups are attached to the elastomers to provide interaction between the elastomer and the reinforcement filler.

In particular embodiments of the treads disclosed herein, the SBR is a functionalized elastomer having functional moieties attached to at least a portion of the total number of branch ends or along the branches of the butadiene portion of the polymer. Such functional moieties may include, for example, amino groups, silanol groups, alkoxysilane groups, carboxylic groups or polyether groups. In particular embodiments, the functional moieties may be selected from amino groups, silanol groups or alkoxysilane groups. In particular embodiments, the functionalized SBR may include a mixture of two or more different such functionalized SBR's or limited to one of the functionalized SBR's.

The rubber compositions disclosed herein may include between 50 phr and 85 phr of the functionalized SBR or alternatively between 60 phr and 85 phr, between 70 phr and 85 phr or between 70 phr and 80 phr. Likewise the rubber compositions may include between 15 phr and 50 phr of the polybutadiene rubber or alternatively between 15 phr and 40 phr, between 15 phr and 30 phr or between 20 phr and 30 phr. As noted above, particular embodiments may include only the functionalized SBR. Particular embodiments include only the functionalized SBR and the BR in the rubber compositions.

In addition to the diene elastomer, particular embodiments of the rubber composition useful for the treads disclosed herein further include a plasticizing system. The plasticizing system may provide both an improvement to the processability of the rubber mix and a means for adjusting the rubber composition's dynamic modulus and glass transition temperature. Suitable plasticizing systems include both a plasticizing liquid and a plasticizing resin to achieve the desired braking and wear characteristics of the tread.

Suitable plasticizing liquids may include any liquid known for its plasticizing properties with diene elastomers. At room temperature (23 °C), these liquid plasticizers or these oils of varying viscosity are liquid as opposed to the resins that are solid. Examples include those derived from petroleum stocks, those having a vegetable base and combinations thereof. Examples of oils that are petroleum based include aromatic oils, paraffinic oils, naphthenic oils, MES oils, TDAE oils and so forth as known in the industry. Also known are liquid diene polymers, the polyolefin oils, ether plasticizers, ester plasticizers, phosphate plasticizers, sulfonate plasticizers and combinations of liquid plasticizers.

Examples of suitable vegetable oils include sunflower oil, soybean oil, safflower oil, corn oil, linseed oil and cotton seed oil. These oils and other such vegetable oils may be used singularly or in combination. In some embodiments, sunflower oil having a high oleic acid content (at least 70 weight percent or alternatively, at least 80 weight percent) is useful, an example being AGRI-PURE 80, available from Cargill with offices in Minneapolis, MN. In particular embodiments of useful rubber compositions disclosed herein, the selection of suitable plasticizing oils is limited to a vegetable oil having a high oleic acid content.

The amount of plasticizing liquid useful in any particular embodiment of the present invention depends upon the particular circumstances and the desired result. In general, for example, the plasticizing liquid may be present in the rubber composition in an amount of between 5 phr and 50 phr or alternatively, between 10 phr and 50 phr, between 10 phr and 45 phr or between 15 phr and 45 phr. Since both a plasticizing liquid and a plasticizing hydrocarbon resin are included in the plasticizing system, the amounts of both types of plasticizers are adjusted as described below to obtain the desired physical characteristics of the tread.

A plasticizing hydrocarbon resin is a hydrocarbon compound that is solid at ambient temperature (*e.g.,* 23 °C) as opposed to liquid plasticizing compounds, such as plasticizing oils. Additionally a plasticizing hydrocarbon resin is compatible, *i.e.,* miscible, with the rubber composition with which the resin is mixed at a concentration that allows the resin to act as a true plasticizing agent, *e.g.,* at a concentration that is typically at least 5 phr.

Plasticizing hydrocarbon resins are polymers/oligomers that can be aliphatic, aromatic or combinations of these types, meaning that the polymeric base of the resin may be formed from aliphatic and/or aromatic monomers. These resins can be natural or synthetic materials and can be petroleum based, in which case the resins may be called petroleum plasticizing resins, or based on plant materials. In particular embodiments, although not limiting the invention, these resins may contain essentially only hydrogen and carbon atoms.

The plasticizing hydrocarbon resins useful in particular embodiment of the present invention include those that are homopolymers or copolymers of cyclopentadiene (CPD) or dicyclopentadiene (DCPD), homopolymers or copolymers of terpene, homopolymers or copolymers of C₅ cut and mixtures thereof.

Such copolymer plasticizing hydrocarbon resins as discussed generally above may include, for example, resins made up of copolymers of (D)CPD/ vinyl-aromatic, of (D)CPD/ terpene, of (D)CPD/ C₅ cut, of terpene/ vinyl-aromatic, of C₅ cut/ vinyl-aromatic and of combinations thereof.

Terpene monomers useful for the terpene homopolymer and copolymer resins include alpha-pinene, beta-pinene and limonene. Particular embodiments include polymers of the limonene monomers that include three isomers: the L-limonene (laevorotatory enantiomer), the D-limonene (dextrorotatory enantiomer), or even the dipentene, a racemic mixture of the dextrorotatory and laevorotatory enantiomers.

Examples of vinyl aromatic monomers include styrene, alpha- methylstyrene, ortho-, meta-, para-methylstyrene, vinyl-toluene, para-tertiobutylstyrene, methoxystyrenes, chloro-styrenes, vinyl-mesitylene, divinylbenzene, vinylnaphthalene, any vinyl-aromatic monomer coming from the C₉ cut (or, more generally, from a C₈ to C₁₀ cut). Particular embodiments that include a vinyl-aromatic copolymer include the vinyl-aromatic in the minority monomer, expressed in molar fraction, in the copolymer.

Particular embodiments include as the plasticizing hydrocarbon resin the (D)CPD homopolymer resins, the (D)CPD/ styrene copolymer resins, the polylimonene resins, the limonene/ styrene copolymer resins, the limonene/ D(CPD) copolymer resins, C₅ cut/ styrene copolymer resins, C₅ cut/ C₉ cut copolymer resins, and mixtures thereof.

Commercially available plasticizing resins that include terpene resins suitable for use in the present invention include a polyalphapinene resin marketed under the name Resin R2495 by Hercules Inc. of Wilmington, DE. Resin R2495 has a molecular weight of about 932, a softening point of about 135°C and a glass transition temperature of about 91°C. Another commercially available product that may be used in the present invention includes DERCOLYTE L120 sold by the company DRT of France. DERCOLYTE L120 polyterpene-limonene resin has a number average molecular weight of about 625, a weight average molecular weight of about 1010, an Ip of about 1.6, a softening point of about 119°C and has a glass transition temperature of about 72° C. Still another commercially available terpene resin that may be used in the present invention includes SYLVARES TR 7125 and/or SYLVARES TR 5147 polylimonene resin sold by the Arizona Chemical Company of Jacksonville, FL. SYLVARES 7125 polylimonene resin has a molecular weight of about 1090, has a softening point of about 125° C, and has a glass transition temperature of about 73°C while the SYLVARES TR 5147 has a molecular weight of about 945, a softening point of about 120 °C and has a glass transition temperature of about 71° C.

Other suitable plasticizing hydrocarbon resins that are commercially available include C₅ cut/ vinyl-aromatic styrene copolymer, notably C₅ cut / styrene or C₅ cut / C₉ cut from Neville Chemical Company under the names SUPER NEVTAC 78, SUPER NEVTAC 85 and SUPER NEVTAC 99; from Goodyear Chemicals under the name WINGTACK EXTRA; from Kolon under names HIKOREZ T1095 and HIKOREZ T1100; and from Exxon under names ESCOREZ 2101 and ECR 373.

Yet other suitable plasticizing hydrocarbon resins that are limonene/styrene copolymer resins that are commercially available include DERCOLYTE TS 105 from DRT of France; and from Arizona Chemical Company under the name ZT115LT and ZT5100.

It may be noted that the glass transition temperatures of plasticizing resins may be measured by Differential Scanning Calorimetry (DCS) in accordance with ASTM D3418 (1999). In particular embodiments, useful resins may be have a glass transition temperature that is at least 25° C or alternatively, at least 40° C or at least 60° C or between 25° C and 95° C, between 40° C and 85° C or between 60° C and 80° C.

The amount of plasticizing hydrocarbon resin useful in any particular embodiment of the present invention depends upon the particular circumstances and the desired result and may be present in an amount of between 15 phr and 60 phr or alternatively, between 20 phr and 50 phr or between 20 phr and 45 phr. As noted above, since both a plasticizing liquid and a plasticizing hydrocarbon resin are included in the plasticizing system, the amount of both types of plasticizers are adjusted as described below to obtain the desired physical characteristics of the tread to improve both the wear and braking properties.

The amount of the plasticizing system is adjusted to provide the rubber composition with a glass transition temperature of between -30 °C and -15 °C or alternatively between -25 °C and -15 °C and a dynamic modulus G* at 60 °C of between 0.9 MPa and 1.15 MPa or alternatively between 0.95 MPa and 1.15 MPa or between 0.95 MPa and 1.07 MPa, both measured in accordance with ASTM D5992-96. As such, the ratio of the amount of liquid plasticizer to the amount of plasticizing resin may be adjusted to achieve the desired physical properties of the rubber composition such that, when the functionalized SBR is used as the majority elastomer in the rubber compositions as disclosed herein, the surprising break in the dry traction-snow traction compromise is achieved. Such ratios may range, for example, from between 0.2 and 2.2 or alternatively between 0.2 and 2.

The rubber compositions disclosed herein further include a reinforcing filler of silica. Useful silica reinforcing fillers known in the art include fumed, precipitated and/or highly dispersible silica (known as "HD" silica). Examples of highly dispersible silicas include Ultrasil 7000 and Ultrasil 7005 from Degussa, the silicas Zeosil 1165MP, 1135MP and 1115MP from Rhodia, the silica Hi-Sil EZ150G from PPG and the silicas Zeopol 8715, 8745 and 8755 from Huber. In particular embodiments, the silica may have a BET surface area, for example, of between 60 m²/g and 250 m²/g or alternatively between 80 m²/g and 230 m²/g. The silica filler may be added to the rubber composition in a quantity of between 60 phr and 125 phr or alternatively between 70 phr and 120 phr, between 80 phr and 110 phr or between 85 phr and 110 phr.

In particular embodiments of the present invention, other reinforcing fillers are excluded so that, for example, no or very little (< 10 phr or <5 phr) carbon black is used.

For coupling the silica filler to the diene elastomer, a coupling agent that is at least bifunctional provides a sufficient chemical and/or physical connection between the inorganic reinforcement filler and the diene elastomer. Examples of such coupling agents include bifunctional organosilanes or polyorganosiloxanes. Such coupling agents and their use are well known in the art. The coupling agent may optionally be grafted beforehand onto the diene elastomer or onto the inorganic reinforcing filler as is known. Otherwise it may be mixed into the rubber composition in its free or non-grafted state. One useful coupling agent is X 50-S, a 50-50 blend by weight of Si69 (the active ingredient) and N330 carbon black, available from Evonik Degussa.

In the rubber compositions disclosed herein, the content of coupling agent may range, for example, between 2 phr and 15 phr or alternatively between 6 phr and 12 phr.

The rubber compositions disclosed herein may be cured with any suitable curing system including a peroxide curing system or a sulfur curing system. Particular embodiments are cured with a sulfur curing system that includes free sulfur and may further include, for example, one or more of accelerators, stearic acid and zinc oxide. Suitable free sulfur includes, for example, pulverized sulfur, rubber maker's sulfur, commercial sulfur, and insoluble sulfur. In particular embodiments of the rubber compositions disclosed herein, the amount of free sulfur included in the rubber composition may range, for example, between 0.5 phr and 6 phr. Particular embodiments may include no free sulfur added in the curing system but instead include sulfur donors.

Accelerators are used to control the time and/or temperature required for vulcanization and to improve the properties of the cured rubber composition. Particular embodiments of the present invention include one or more accelerators. One example of a suitable primary accelerator useful in the present invention is a sulfenamide. Examples of suitable sulfenamide accelerators include n-cyclohexyl -2-benzothiazole sulfenamide (CBS), N-tert-butyl-2-benzothiazole Sulfenamide (TBBS), N-Oxydiethyl-2-benzthiazolsulfenamid (MBS) and N'-dicyclohexyl-2-benzothiazolesulfenamide (DCBS). Combinations of accelerators are often useful to improve the properties of the cured rubber composition and the particular embodiments include the addition of secondary accelerators.

Particular embodiments may include as a secondary accelerant the use of a moderately fast accelerator such as, for example, diphenylguanidine (DPG), triphenyl guanidine (TPG), diorthotolyl guanidine (DOTG), o-tolylbigaunide (OTBG) or hexamethylene tetramine (HMTA). Such accelerators may be added in an amount, for example, of up to 4 phr, between 0.5 and 4 phr, between 0.5 and 3 phr or between 1 and 2 phr. Particular embodiments may exclude the use of fast accelerators and/or ultra-fast accelerators such as, for example, the fast accelerators: disulfides and benzothiazoles; and the ultra-accelerators: thiurams, xanthates, dithiocarbamates and dithiophosphates.

Other additives can be added to the rubber compositions disclosed herein as known in the art. Such additives may include, for example, some or all of the following: antidegradants, antioxidants, fatty acids, waxes, stearic acid and zinc oxide. Examples of antidegradants and antioxidants include 6PPD, 77PD, IPPD and TMQ and may be added to rubber compositions in an amount, for example, of from 0.5 phr and 5 phr. Zinc oxide may be added in an amount, for example, of between 1 phr and 6 phr or alternatively, of between 1.5 phr and 4 phr. Waxes may be added in an amount, for example, of between 1 phr and 5 phr.

The rubber compositions that are embodiments of the present invention may be produced in suitable mixers, in a manner known to those having ordinary skill in the art, typically using two successive preparation phases, a first phase of thermo-mechanical working at high temperature, followed by a second phase of mechanical working at lower temperature.

The first phase of thermo-mechanical working (sometimes referred to as "non-productive" phase) is intended to mix thoroughly, by kneading, the various ingredients of the composition, with the exception of the vulcanization system. It is carried out in a suitable kneading device, such as an internal mixer or an extruder, until, under the action of the mechanical working and the high shearing imposed on the mixture, a maximum temperature generally between 120° C and 190° C is reached.

After cooling of the mixture, a second phase of mechanical working is implemented at a lower temperature. Sometimes referred to as "productive" phase, this finishing phase consists of incorporating by mixing the vulcanization (or cross-linking) system (sulfur or other vulcanizing agent and accelerator(s)), in a suitable device, for example an open mill. It is performed for an appropriate time (typically for example between 1 and 30 minutes) and at a sufficiently low temperature lower than the vulcanization temperature of the mixture, so as to protect against premature vulcanization.

The rubber composition can be formed into treads for tires that are useful for passenger cars and/or light trucks. The treads may be formed as tread bands and then later made a part of a tire or they be formed directly onto a tire carcass by, for example, extrusion and then cured in a mold. As such, tread bands may be cured before being disposed on a tire carcass or they may be cured after being disposed on the tire carcass. Typically a tire tread is cured in a known manner in a mold that molds the tread elements into the tread, including, *e.g.,* the grooves, ribs and/or blocks molded into the tread.

The invention is further illustrated by the following examples, which are to be regarded only as illustrations and not delimitative of the invention in any way. Following is a description of the testing procedures used in the examples that follow.

Modulus of elongation (MPa) was measured at 10% (MA10) at a temperature of 23 °C based on ASTM Standard D412 on dumb bell test pieces. The measurements were taken in the second elongation; *i.e.,* after an accommodation cycle. These measurements are secant moduli in MPa, based on the original cross section of the test piece.

Snow grip (%) on snow-covered ground was evaluated by measuring the forces on a single driven test tire in snow according to the ASTM F1805 test method. The vehicle travels at a constant 5 mph speed and the forces are measured on the single test tire at the target slip. A value greater than that of the Standard Reference Test Tire (SRTT), which is arbitrarily set to 100, indicates an improved result, *i.e.,* improved grip on snow.

Dry grip performance (%) of a tire mounted on an automobile fitted with an ABS braking system was measured by determining the distance necessary to go from 60 mph to a complete stop upon sudden braking on a dry asphalt surface. A value greater than that of the control, which is arbitrarily set to 100, indicates an improved result, *i.e.,* a shorter braking distance and improved dry grip.

The maximum tan delta dynamic properties for the rubber compositions were measured at 23° C on a Metravib Model VA400 ViscoAnalyzer Test System in accordance with ASTM D5992-96. The response of a sample of vulcanized material (double shear geometry with each of the two 10 mm diameter cylindrical samples being 2 mm thick) was recorded as it was being subjected to an alternating single sinusoidal shearing stress at a frequency of 10 Hz under a controlled temperature of 23° C. Scanning was effected at an amplitude of deformation of 0.05 to 50 % (outward cycle) and then of 50 % to 0.05% (return cycle). The maximum value of the tangent of the loss angle tan delta (max tan δ) was determined during the return cycle.

Dynamic properties (Tg and G*) for the rubber compositions were measured on a Metravib Model VA400 ViscoAnalyzer Test System in accordance with ASTM D5992-96. The response of a sample of vulcanized material (double shear geometry with each of the two 10 mm diameter cylindrical samples being 2 mm thick) was recorded as it was being subjected to an alternating single sinusoidal shearing stress of a constant 0.7 MPa and at a frequency of 10 Hz over a temperature sweep from -60° C to 100° C with the temperature increasing at a rate of 1.5° C/min. The shear modulus G* at 60° C was captured and the temperature at which the max tan delta occurred was recorded as the glass transition temperature, Tg.

### Example 1

Rubber compositions were prepared using the components shown in Table **1.** The amount of each component making up the rubber compositions shown in Table **1** are provided in parts per hundred parts of rubber by weight (phr). The fSBR was functionalized with an amine group and the resin was a C₅C₉ resin; the silane coupling agent was Si69, the plasticizing oil was AGRI-PURE 80; the carbon black was N234 and the silica was Zeosil 1165.

The rubber formulations were prepared by mixing the components given in Table **1,** except for the sulfur and the accelerators, in a Banbury mixer operating between 25 and 65 RPM until a temperature of between 130° C and 170° C was reached. The accelerators and sulfur were added in the second phase on a mill and then vulcanization was effected. The formulations were then tested to measure their physical properties, which are also reported in Table **1.**

**Table 1 - Rubber Formulations and Physical Properties**

| **Formulations** | **W1** | **F1** | **F2** | **F3** | **F4** | **F5** | **F6** |
|---|---|---|---|---|---|---|---|
| BR | 36 | 20 | 25 | 25 | 25 | 25 | 46 |
| SBR | 64 | | | | | | |
| fSBR | | 80 | 75 | 75 | 75 | 75 | 54 |
| Silica | 100 | 100 | 120 | 117 | 120 | 106 | 100 |
| Carbon Black | 10 | 6.56 | 6.56 | 6.56 | 6.56 | 6.56 | 6.56 |
| Plasticizing Oil | 27.4 | 15.4 | 28.9 | 43.1 | 38.8 | 29.5 | 8.3 |
| Resin | 21 | 41.3 | 41.3 | 22.5 | 29 | 30.9 | 47 |
| Silane Coupling Agent | 7.6 | 8.5 | 10.2 | 10.0 | 10.2 | 9.0 | 8 |
| Additives | 3.6 | 4.3 | 5.8 | 5.7 | 5.8 | 5.7 | 4.3 |
| Curing Package | 9.1 | 8.6 | 8.7 | 8.7 | 8.7 | 8.7 | 8.5 |

| **Physical Properties** | | | | | | | |
|---|---|---|---|---|---|---|---|
| MA10 @ 23° C (MPa) | 6.1 | 5.5 | 6.2 | 5.8 | 6.4 | 5.4 | 6.4 |
| Modulus G* @ 60° C | 1.14 | 1.05 | 0.98 | 0.98 | 1.05 | 1.04 | 1.15 |
| Max Tan Delta @ 23° C | 0.38 | 0.36 | 0.39 | 0.35 | 0.38 | 0.35 | 0.42 |
| Tg, °C | -20.9 | -16.9 | -20.8 | -29.5 | -27.4 | -26.4 | -16.8 |

### Example 2

Tires were built using the rubber compositions W1 and F6. One comparative tire C**1** having a tread formed of W1 had a tread thickness of 8.2 mm and had an average shoulder tread block length and an average central tread block length of 9 mm. The inventive tire T**1** formed of F6 had a tread thickness of 7 mm and had an average shoulder tread block length of 16 mm and an average central tread block length of 8.2 mm. There were no lateral grooves and the sipes were full depth, *i.e.,* to the depth of the wear bars. A second comparative tire T2 was built that was structurally inventive but made from witness material. The tires were mounted and tested in accordance with the procedures provided above. The results are provided in Table **2.**

**Table 2 - Tire Results**

| | **C1** | **T1** | **C2** |
|---|---|---|---|
| Snow Traction | 100 | 109 | 104 |
| Dry Traction | 100 | 106 | 103 |

As can be seen, the tire T1 built having both the structural and materials in accordance with the disclosure herein had significantly improved snow and dry traction over the comparative tires.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

It should be understood from the foregoing description that various modifications and changes may be made to the embodiments of the present invention without departing from its true spirit. The foregoing description is provided for the purpose of illustration only and should not be construed in a limiting sense. Only the language of the following claims should limit the scope of this invention.

## Claims

1. A tread for a tire defining lateral and longitudinal directions, the tread comprising:
a central portion and a shoulder portion separated by a shoulder longitudinal groove;
a plurality of central tread blocks located in the central portion that are formed by central lateral elements consisting of lateral central sipes and lateral central grooves, wherein the lateral central grooves number no more than 10 % of a total of the central lateral elements;
a plurality of shoulder tread blocks located in the shoulder portion that are formed by shoulder lateral elements consisting of lateral shoulder sipes and lateral shoulder grooves, wherein the lateral shoulder grooves number no more than 35 % of a total of the shoulder lateral elements, the central and shoulder tread blocks disposed circumferentially about the tread, the central tread blocks having an average central tread block length of between 6.5 mm and 10 mm and the shoulder tread blocks having an average shoulder tread block length of between 10 mm and 20 mm;
wherein the tread has a tread thickness in the central portion of between 6.5 mm and 7.7 mm and is formed at least in part of a rubber composition that is based upon a cross-linkable rubber composition, the cross-linkable rubber composition comprising, per hundred parts by weight of rubber (phr):
100 phr of rubber selected from between 50 phr and 100 phr of a functionalized styrene-butadiene rubber (SBR) and between 0 phr and 50 phr of a polybutadiene rubber, wherein the functionalized SBR includes a functional group attached as an active moiety;
a plasticizing system comprising a plasticizing resin having a glass transition temperature (Tg) of at least 25 °C and a plasticizing liquid, wherein the plasticizing system is added in an effective amount to provide the rubber composition with a glass transition temperature of between -30 °C and -15 °C and with a dynamic modulus G* at 60 °C of between 0.9 MPa and 1.15 MPa;
between 95 phr and 125 phr of a silica filler; and
a sulfur curing system.

2. The tread of claim 1, wherein the 100 phr of rubber is selected from between 50 phr and 85 phr of the functionalized styrene-butadiene rubber (SBR) and between 15 phr and 50 phr of the polybutadiene rubber.

3. The tread of any of the preceding claims, wherein the tread is formed totally of the rubber composition.

4. The tread of any of the preceding claims, wherein there are no lateral grooves in the central portion of the tread.

5. The tread of any of the preceding claims, wherein there are no lateral grooves in the shoulder portion of the tread.

6. The tread of any of the preceding claims, wherein at least 80 % of the lateral sipes located in the central portion extend across their entire lateral length to a depth of at least 90% of a wear bar depth.

7. The tread of any of the preceding claims, wherein at least 80 % of the lateral sipes located in the central portion extend across their entire lateral length to a depth of at least 100% of a wear bar depth.

8. The tread of any of the preceding claims, wherein at least 80 % of the lateral sipes located in the shoulder portion extend across their entire lateral length to a depth of at least 90% of a wear bar depth.

9. The tread of any of the preceding claims, wherein at least 80 % of the lateral sipes located in the shoulder portion extend across their entire lateral length to a depth of at least 100% of a wear bar depth.

10. The tread of any of the preceding claims, wherein at least 90 % of the lateral sipes located in both the shoulder portion and the central potion extend across their entire length to a depth of at least 90 % of a bottom of the longitudinal groove.

11. The tread of any of the preceding claims, wherein the tread depth is between 6.5 mm and 7.3 mm.

12. The tread of any of the preceding claims, wherein the average central tread block length is between 6.8 mm and 9 mm.

13. The tread of any of the preceding claims, wherein the average shoulder tread block length is between 11 mm and 19 mm.

14. The tread of any of the preceding claims, wherein the lateral central sipes are disposed at an angle of up to 45 degrees from lateral.

15. The tread of any of the preceding claims, wherein the lateral central sipes are disposed at an angle of between 30 degrees and 45 degrees from lateral.

16. The tread of any of the preceding claims, wherein the lateral central sipes are disposed at an angle of between 35 degrees and 40 degrees from lateral.

17. The tread of any of the preceding claims, wherein at least a portion of the central lateral sipes, the shoulder lateral sipes or a combination thereof have chamfered openings to a tread face.

18. The tread of any of the preceding claims, wherein the functionalized SBR has a *trans*-1,4 content of between 30 wt. % and 70 wt. %.

19. The tread of any of the preceding claims, wherein the functional group is selected from an amino moiety, a silanol moiety, an alkoxysilane moiety, a carboxylic moiety, a polyether moiety or combinations thereof.

20. The tread of any of the preceding claims, wherein the dynamic modulus G* at 60 °C of the rubber composition is between 0.95 MPa and 1.07 MPa.

## Patentansprüche

1. Lauffläche für einen Reifen, die eine Querrichtung und eine Längsrichtung definiert, wobei die Lauffläche Folgendes umfasst:
einen zentralen Abschnitt und einen Schulterabschnitt, die durch eine Schulterlängsrille getrennt sind;
eine Vielzahl von zentralen Laufflächenblöcken, die sich in dem zentralen Abschnitt befinden und durch zentrale Seitenelemente gebildet sind, die aus zentralen seitlichen Lamellen und zentralen Querrillen bestehen, wobei die Zahl der zentralen Querrillen nicht mehr als 10% einer Gesamtzahl der zentralen Seitenelemente beträgt;
eine Vielzahl von Schulterlaufflächenblöcken, die sich in dem Schulterabschnitt befinden und durch Schulterseitenelemente gebildet werden, die aus seitlichen Schulterlamellen und Schulterquerrillen bestehen, wobei die Zahl der Schulterquerrillen nicht mehr als 35% einer Gesamtzahl der Schulterseitenelemente beträgt, wobei die zentralen Laufflächenblöcke und die Schulterlaufflächenblöcke um den Umfang der Lauffläche herum angeordnet sind, wobei die zentralen Laufflächenblöcke eine durchschnittliche Länge eines zentralen Laufflächenblocks zwischen 6,5 mm und 10 mm haben und die Schulterlaufflächenblöcke eine durchschnittliche Länge eines Schulterlaufflächenblocks zwischen 10 mm und 20 mm haben;
wobei die Lauffläche eine Laufflächendicke in dem zentralen Abschnitt zwischen 6,5 mm und 7,7 mm hat und wenigstens teilweise aus einer Kautschukzusammensetzung gebildet ist, die auf einer vernetzbaren Kautschukzusammensetzung basiert, wobei die vernetzbare Kautschukzusammensetzung pro hundert Gewichtsteile Kautschuk (phr) Folgendes umfasst:
100 phr Kautschuk, der aus zwischen 50 phr und 100 phr eines funktionalisierten Styrol-Butadien-Kautschuks (SBR) und zwischen 0 phr und 50 phr eines Polybutadienkautschuks ausgewählt ist, wobei der funktionalisierte SBR eine als aktive Einheit angelagerte funktionelle Gruppe aufweist;
ein weichmachendes System, das ein weichmachendes Harz mit einer Glasübergangstemperatur (Tg) von mindestens 25°C und eine weichmachende Flüssigkeit umfasst, wobei das weichmachende System in einer wirksamen Menge zugesetzt wird, um der Kautschukzusammensetzung eine Glasübergangstemperatur von zwischen -30°C und-15°C und einen dynamischen Modul G* bei 60°C zwischen 0,9 MPa und 1,15 MPa zu verleihen;
zwischen 95 phr und 125 phr eines Siliciumdioxidfüllstoffs; und
ein Schwefelhärtungssystem.

2. Lauffläche nach Anspruch 1, wobei die 100 phr Kautschuk aus zwischen 50 phr und 85 phr des funktionalisierten Styrol-Butadien-Kautschuks (SBR) und zwischen 15 phr und 50 phr des Polybutadienkautschuks ausgewählt sind.

3. Lauffläche nach einem der vorhergehenden Ansprüche, wobei die Lauffläche ganz aus der Kautschukzusammensetzung gebildet ist.

4. Lauffläche nach einem der vorhergehenden Ansprüche, wobei es in dem zentralen Abschnitt der Lauffläche keine Querrillen gibt.

5. Lauffläche nach einem der vorhergehenden Ansprüche, wobei es in dem Schulterabschnitt der Lauffläche keine Querrillen gibt.

6. Lauffläche nach einem der vorhergehenden Ansprüche, wobei sich mindestens 80% der seitlichen Lamellen in dem zentralen Abschnitt über ihre gesamte seitliche Länge bis in eine Tiefe von mindestens 90% einer Verschleißstangentiefe erstrecken.

7. Lauffläche nach einem der vorhergehenden Ansprüche, wobei sich mindestens 80% der seitlichen Lamellen in dem zentralen Abschnitt über ihre gesamte seitliche Länge bis in eine Tiefe von mindestens 100% einer Verschleißstangentiefe erstrecken.

8. Lauffläche nach einem der vorhergehenden Ansprüche, wobei sich mindestens 80% der seitlichen Lamellen in dem Schulterabschnitt über ihre gesamte seitliche Länge bis in eine Tiefe von mindestens 90% einer Verschleißstangentiefe erstrecken.

9. Lauffläche nach einem der vorhergehenden Ansprüche, wobei sich mindestens 80% der seitlichen Lamellen in dem Schulterabschnitt über ihre gesamte seitliche Länge bis in eine Tiefe von mindestens 100% einer Verschleißstangentiefe erstrecken.

10. Lauffläche nach einem der vorhergehenden Ansprüche, wobei sich mindestens 90% der seitlichen Lamellen sowohl in dem Schulterabschnitt als auch in dem zentralen Abschnitt über ihre gesamte Länge bis in eine Tiefe von mindestens 90% eines Bodens der Längsrille erstrecken.

11. Lauffläche nach einem der vorhergehenden Ansprüche, wobei die Laufflächentiefe zwischen 6,5 mm und 7,3 mm beträgt.

12. Lauffläche nach einem der vorhergehenden Ansprüche, wobei die durchschnittliche Länge eines zentralen Laufflächenblocks zwischen 6,8 mm und 9 mm beträgt.

13. Lauffläche nach einem der vorhergehenden Ansprüche, wobei die durchschnittliche Länge eines Schulterlaufflächenblocks zwischen 11 mm und 19 mm beträgt.

14. Lauffläche nach einem der vorhergehenden Ansprüche, wobei die seitlichen zentralen Lamellen in einem Winkel von bis zu 45 Grad zur Lateralen angeordnet sind.

15. Lauffläche nach einem der vorhergehenden Ansprüche, wobei die seitlichen zentralen Lamellen in einem Winkel zwischen 30 Grad und 45 Grad zur Lateralen angeordnet sind.

16. Lauffläche nach einem der vorhergehenden Ansprüche, wobei die seitlichen zentralen Lamellen in einem Winkel zwischen 35 Grad und 40 Grad zur Lateralen angeordnet sind.

17. Lauffläche nach einem der vorhergehenden Ansprüche, wobei mindestens ein Abschnitt der zentralen seitlichen Lamellen, der seitlichen Schulterlamellen oder einer Kombination davon abgeschrägte Öffnungen zu einer Laufflächenstirnseite hat.

18. Lauffläche nach einem der vorhergehenden Ansprüche, wobei der funktionalisierte SBR einen *trans*-1,4-Gehalt zwischen 30 Gew.-% und 70 Gew.-% hat.

19. Lauffläche nach einem der vorhergehenden Ansprüche, wobei die funktionelle Gruppe aus einer Aminoeinheit, einer Silanoleinheit, einer Alkoxysilaneinheit, einer Carboxyleinheit, einer Polyethereinheit oder Kombinationen davon ausgewählt ist.

20. Lauffläche nach einem der vorhergehenden Ansprüche, wobei der dynamische Modul G* bei 60°C der Kautschukzusammensetzung zwischen 0,95 MPa und 1,07 MPa beträgt.

## Revendications

1. Bande de roulement pour pneumatique, définissant des sens latéral et longitudinal, la bande de roulement comportant :
une partie centrale et une partie formant épaulement séparées par une rainure longitudinale d'épaulement,
une pluralité de blocs centraux de bande de roulement situés dans la partie centrale, lesquels sont formés par des éléments latéraux de centre consistant en lamelles latérales de centre et rainures latérales de centre, les rainures latérales de centre étant en nombre non supérieur à 10 % d'un total des éléments latéraux de centre ;
une pluralité de blocs d'épaulement de bande de roulement situés dans la partie formant épaulement, lesquels sont formés par des éléments latéraux d'épaulement consistant en lamelles latérales d'épaulement et rainures latérales d'épaulement, les rainures latérales d'épaulement étant en nombre non supérieur à 35 % d'un total des éléments latéraux d'épaulement, les blocs centraux et d'épaulement de bande de roulement étant disposés sur le pourtour de la bande de roulement, les blocs centraux de bande de roulement ayant une longueur moyenne de blocs centraux de bande de roulement de 6,5 mm à 10 mm et les blocs d'épaulement de bande de roulement ayant une longueur moyenne de blocs d'épaulement de bande de roulement de 10 mm à 20 mm ;
la bande de roulement ayant, dans la partie centrale, une épaisseur de 6,5 à 7,7 mm et étant formée au moins en partie d'une composition caoutchouteuse à base de composition caoutchouteuse réticulable, la composition caoutchouteuse réticulable comprenant, pour cent parties en poids de caoutchouc (cpc) :
100 cpc de caoutchouc choisies parmi 50 cpc à 100 cpc d'un caoutchouc styrène-butadiène (CSB) fonctionnalisé et 0 cpc à 50 cpc d'un caoutchouc polybutadiène, le CSB fonctionnalisé comprenant un groupe fonctionnel fixé en tant que groupement actif ;
un système plastifiant comprenant une résine plastifiante à température de transition vitreuse (Tv) d'au moins 25°C et un liquide plastifiant, le système plastifiant étant ajouté en quantité efficace pour doter la composition caoutchouteuse d'une température de transition vitreuse de -30°C à -15°C et d'un module dynamique G* de 0,9 MPa à 1,15 MPa à 60°C ;
de 95 cpc à 125 cpc de charge de silice ; et
un système de polymérisation du soufre.

2. Bande roulement selon la revendication 1, dans laquelle les 100 cpc de caoutchouc sont choisies parmi 50 cpc à 85 cpc du caoutchouc styrène-butadiène (CSB) fonctionnalisé et 15 cpc à 50 cpc du caoutchouc butadiène.

3. Bande de roulement selon l'une quelconque des revendications précédentes, la bande de roulement étant entièrement formée de la composition caoutchouteuse.

4. Bande de roulement selon l'une quelconque des revendications précédentes, dans laquelle il n'y a pas de rainures latérales dans la partie centrale de la bande de roulement.

5. Bande de roulement selon l'une quelconque des revendications précédentes, dans laquelle il n'y a pas de rainures latérales dans la partie formant épaulement de la bande de roulement.

6. Bande de roulement selon l'une quelconque des revendications précédentes, dans laquelle au moins 80 % des lamelles latérales situées dans la partie centrale s'étendent sur toute leur longueur latérale jusqu'à une profondeur d'au moins 90 % d'une profondeur de témoin d'usure.

7. Bande de roulement selon l'une quelconque des revendications précédentes, dans laquelle au moins 80 % des lamelles latérales situées dans la partie centrale s'étendent sur toute leur longueur latérale jusqu'à une profondeur d'au moins 100 % d'une profondeur de témoin d'usure.

8. Bande de roulement selon l'une quelconque des revendications précédentes, dans laquelle au moins 80 % des lamelles latérales situées dans la partie formant épaulement s'étendent sur toute leur longueur latérale jusqu'à une profondeur d'au moins 90 % d'une profondeur de témoin d'usure.

9. Bande de roulement selon l'une quelconque des revendications précédentes, dans laquelle au moins 80 % des lamelles latérales situées dans la partie formant épaulement s'étendent sur toute leur longueur latérale jusqu'à une profondeur d'au moins 100 % d'une profondeur de témoin d'usure.

10. Bande de roulement selon l'une quelconque des revendications précédentes, dans laquelle au moins 90 % des lamelles latérales situées dans la partie formant épaulement et dans la partie centrale s'étendent sur toute leur longueur latérale jusqu'à une profondeur d'au moins 90 % d'un fond de la rainure longitudinale.

11. Bande de roulement selon l'une quelconque des revendications précédentes, dans laquelle la profondeur de la bande de roulement est de 6,5 mm à 7,3 mm.

12. Bande de roulement selon l'une quelconque des revendications précédentes, dans laquelle la longueur moyenne des blocs de partie centrale de bande de roulement est de 6,8 mm à 9 mm.

13. Bande de roulement selon l'une quelconque des revendications précédentes, dans laquelle la longueur moyenne des blocs d'épaulement de bande de roulement est de 11 mm à 19 mm.

14. Bande de roulement selon l'une quelconque des revendications précédentes, dans laquelle les lamelles latérales de centre sont disposées suivant un angle d'un maximum de 45 degrés par rapport au sens latéral.

15. Bande de roulement selon l'une quelconque des revendications précédentes, dans laquelle les lamelles latérales de centre sont disposées suivant un angle de 30 à 45 degrés par rapport au sens latéral.

16. Bande de roulement selon l'une quelconque des revendications précédentes, dans laquelle les lamelles latérales de centre sont disposées suivant un angle de 35 à 40 degrés par rapport au sens latéral.

17. Bande de roulement selon l'une quelconque des revendications précédentes, dans laquelle au moins une partie des lamelles latérales de centre, des lamelles latérales d'épaulement ou d'une combinaison de celles-ci ont des ouvertures chanfreinées débouchant dans une face de la bande de roulement.

18. Bande de roulement selon l'une quelconque des revendications précédentes, dans laquelle le CSB fonctionnalisé contient de 30 % en poids à 70 % en poids de *trans*-1,4.

19. Bande de roulement selon l'une quelconque des revendications précédentes, dans laquelle le groupe fonctionnel est choisi parmi un groupement amino, un groupement silanol, un groupement alcoxysilane, un groupement carboxylique, un groupement polyéther ou des combinaisons de ceux-ci.

20. Bande de roulement selon l'une quelconque des revendications précédentes, dans laquelle le module dynamique G* est de 0,95 MPa à 1,07 MPa à une température de 60°C de la composition caoutchouteuse.
